# EUROPEAN PATENT APPLICATION

(11) **EP 4 336 785 A1**
(43) Date of publication of application: **13.03.2024**
(21) Application number: 22194690.8
(22) Date of filing: 08.09.2022
(51) Int. Cl.: H04L 12/40

(54) **A SERIAL ASYNCHRONOUS COMMUNICATIONS NETWORK, A NETWORK INTERFACE MODULE AND METHODS FOR TRANSMITTING AND RECEIVING MESSAGES OVER THE NETWORK**

(71) Applicant: The Consortium Team SA, 1204 Geneva GE (CH)
(72) Inventor: El Abbouti, Abdelmajid, 01630 Saint Genis - Pouilly (FR)
(74) Representative: Odoom, Ernest

(57) **Abstract**

The present invention relates to a serial asynchronous communications network to allow a number of electronic devices, controllers and/or monitors to be communicably connected to one another. Embodiments of the invention provide for an easily expandable network to be realised and allow for an efficient method for transmitting and receiving messages over the network. Embodiments of the invention may be deployed in a network comprising a communications bus which may be realised as a single wire, track or cable. Other embodiments are suitable for a communications bus realised as a pair of wires operating in differential mode. The pair of wires may have a twisted pair configuration according to some embodiments. Embodiments of the invention also include provision for bus arbitration, thus avoiding collisions on the bus when a plurality of actors attempt to communicate over the bus simultaneously.

## Description

### TECHNICAL DOMAIN

The present invention relates generally to the domain of digital electronic data processing. More particularly, the invention concerns the electronic transmission of digital information over a communication network or bus. Some embodiments of the present invention may be used in a technical network and may be particularly useful in the fields of domotics or building automation, for example.

### BACKGROUND

Local networks for communication of electronic messages between different electronic devices, or between electronic devices and controllers, are well known. For example, the Controller Area Network (CAN) is a bus comprising a pair of conductors, usually a twisted pair of wires or sometimes two coaxial cables, connecting participating elements of the network together according to the CAN bus protocol. The participating elements have an electronic interface which includes a microcontroller for managing the messages on the bus. The CAN bus is mostly used for embedded systems employed in the automotive industry. A CAN bus may also be realised using an optical fibre instead of a galvanic connection.

Bus technology is increasingly being employed in the field of domotics. Using such bus technology, comprising a local network of sensors and actuators linked by a bus cable, so-called smart buildings can be made to automatically adjust the temperature or adjust the lighting in rooms depending on how the rooms are being used; or to raise and lower blinds automatically depending on the time of day or depending on the ambient light; or to control door locks, and so on. The use of such technology can therefore help in addressing problems related to the cost-effectiveness of operating a building as well as contributing to aspects related to safety, security and comfort of the building's occupants using flexible and convenient systems.

A well-known standard for domotics systems is the Konnex/EIB standard (KNX). A KNX line is a bus cable which may have up to 64 devices, or elements, connected to it. Branches can be added at any point in the line. A line repeater can be used to extend a line if more than 64 devices are needed. The line repeater therefore allows for further line segments to be added, with each segment having a maximum of 64 devices. No more than three repeaters can be operated in parallel in a line, therefore allowing for a maximum of 255 devices, or elements, to be connected to the bus. Another way of expanding the installation is to create new lines using Line Couplers. Up to 15 lines can be operated, via Line Couplers, on a line - the main line - to form a so-called "area". The main line can likewise accommodate up to 64 devices. Because, in practice, line repeaters and Line Couplers (or Area Couplers) are often the same hardware, lines are not normally extended to their maximum size using line repeaters; new lines are generally created instead. Line Couplers in the main line count as bus devices. In practice, area coupling is typically performed using Line Couplers parameterised as area couplers. The area line is also called the backbone. For reasons of signal integrity and propagation delays, cable lengths between two devices can only be up to a maximum of 700 metres. A line segment cannot be longer than 1000 metres.

Every device in a KNX system is assigned a unique number, which functions as its address. Messages, or "telegrams" transmitted on the bus include an address so that devices may recognise which telegrams are for their attention. The address consists of three numbers separated by dots, the numbers depending on the position of the device within the topology of the bus. This may be regarded as a form of hierarchical addressing, indicating the topological location of the different devices within the bus system. The first number denotes the number of the area. The second number denotes the line number. The third number is a sequential number indicating the device's position in the line. Addresses are needed in order to unambiguously identify devices, especially when programming them or querying them. A special point to note is that, when attributing physical addresses, area/line couplers must always be given the number 0 as their sequential number.

Consequently, the task of upgrading or expanding a KNX system is not a straightforward one from a programming and a hardware installation point of view and may involve extensive amounts of cable routing and some rather complicated re-programming of the system.

European patent publication number EP3284220B1 discloses an invention provided by the inventor of the present invention, in which a very much simpler bus architecture is proposed, and in which an arbitration protocol is proposed for solving a problem of possible collisions on the bus when more than one device tries to communicate over the bus at the same time. The bus disclosed in the publication allows for up to 65,536 devices to be connected without the need for couplers and repeaters and so on. Having a bus with up to 65,536 devices without the complicated topology of a KNX-type system means that it is possible to have a very large number of devices connected to a single bus line. This bus architecture also means that it is very much easier to add new devices to an existing network without the complicated re-programming that would otherwise have been required in an equivalent KNX system. The novel bus arbitration protocol disclosed in the publication allows for a secondary beneficial effect to be realised since it also provides a way for elements sharing the bus to detect the address of a sender of a message on the bus without the message having to explicitly include the sender's address, thus allowing for faster decoding of the sender's address. However, the protocol does not provide a solution for simplifying and for speeding up the transmission of the message packet itself, nor does it disclose how to reinforce the transmission of the message packet to provide higher confidence of a message reaching its destination without suffering a fatal amount of degradation, especially where longer bus lengths using galvanic conductors are employed or where a system takes advantage of the large number of devices which are possible to be connected to the bus line due to the simplified topology afforded by the invention disclosed therein.

United States patent publication number US6,256,557 B1 discloses a bus for serial communication of electronic messages between participating electronic devices in a vehicle environment. The disclosed serial data communication system includes a serial data bus connected to a plurality of electronic devices in a vehicle. Each of the electronic devices includes an encoder for encoding bits of information and a decoder for receiving data and decoding the received serial data. The disclosure provides for a communication protocol for communicating data on the serial data bus including the steps of providing serial data to be transmitted onto the serial data bus in the vehicle. The serial data is encoded as a function of a time-varying based pulse width and the time-based variable pulse width is assigned to groupings of at least two data bits So as to code each of the data bit groupings. A series of coded data bit groupings are transmitted onto the serial data bus in the vehicle. The electronic devices may receive and decode the encoded data signals to decipher the data.

International patent application publication number WO2019055894A1 discloses a communication protocol in which a signal may have a rising edge followed by 8 possible different falling edges, thus giving 8 possible different pairs of rising/falling edge pairs, allowing for 8 different codes to be represented. This disclosure effectively shows how to use a modulation of a width of a signal to encode onto 3 bits.

### BRIEF SUMMARY OF THE INVENTION

It is a goal of the present invention to provide a serial asynchronous digital communications bus which is simple to install and simple to upgrade when new components are to be added to the network. Embodiments of the present invention are particularly adapted for networks in which the bus line is realised as at least one conductive wire, cable or track, which would otherwise be liable to signal degradation over longer bus lines and/or where many devices are attached to the bus line. It is also a goal to provide a cost-effective solution. It is a further goal that embodiments of the present invention have a minimal impact on electromagnetic contamination in the environment in which they are deployed, as well as to be minimally impacted themselves by electromagnetic interference when deployed in a noisy environment. It is a still further goal of the present invention to provide a more efficient way of transmitting a message over the communications bus. It is yet a further goal of the present invention to provide a communications bus having a length of up to several hundreds of metres and more while maintaining accurate and reliable transmission of messages and/or to provide a communications bus having a large number of participants, for example up to 65,536 devices, while maintaining accurate and reliable transmission of messages.

Embodiments of the present invention may be deployed within an electronic communications network. Some embodiments may find use in communications networks capable of peer-to-peer and/or broadcast mode transmissions, notably within networks which may be termed asynchronous networks. Other embodiments may be deployed in networks having a centralised control, such as a master-slave configuration, for example.

Elements, or participants, in the communications network may exchange information with each other, for example information on the participants' status or commands or instructions for one or more participants. The information may be exchanged directly between the elements or via a centralised or decentralised control system. The elements may be pieces of electronic equipment such as light bulbs, locking systems, household appliances, heating or ventilation systems, shutters, doors and the like. Other elements may include sensors such as light sensors, presence detectors, temperature sensors, gas sensors, etc. Still other elements may include control elements such as in coffee makers, clocks, plant-watering systems or switches or controllers for controlling the aforementioned sensors and devices, for example. Certain embodiments may find particular use in a domotics setting, for example, although other embodiments may well be deployed in different settings. Some elements in the network may exchange information on their functional state or measurements that they have made and so on, while other elements may issue commands or instructions for controlling one or more of the elements.

Certain embodiments of the present invention may be deployed in a communications network comprising a single-wire bus. The wire may be a copper strip, for example, or a standard copper conducting wire as would be used in any application in a domotics environment, for example. Alternatively, the bus may have two wires: one carrying the signal with the information to be communicated and the other being the ground cable; or the two wires both carrying the signal to be communicated in differential form. Typically, the bus may be an asynchronous bus. An asynchronous bus does not need to include a separate clock line. The bus may be configured as a peer-to-peer network, where none of the participating devices are considered to be a master and any of the participating devices may transmit information to one or more of the remaining participants according to an arbitration protocol such as the one described in EP3284220B1, mentioned above, or similar. The bus may also be capable of supporting broadcast transmissions. The bus may be capable of hosting a communications protocol in which the sender's address is either explicitly included in the message or implicitly included using an idle time. The bus may be capable of hosting communications protocols in which the recipient's address is either included in the message or omitted from the message.

Embodiments of the present invention may be deployed in bus systems which are not necessarily embodied as electrical wires. Indeed, the bus may be realised as optical fibres or even a wireless system (using radio waves, sound waves or signals or light waves or optical signals for example). Preferred embodiments however are those in which the bus is a wired bus. This provides for security advantages and reliability advantages and provides for convenient and practical solutions to be realised. In some embodiments, the wires for the bus may be provided by the structure of the building itself. Bus wiring may be shared with other wiring already present in the building, allowing for economy of installation.

As part of the achievement of these aims and others, the invention proposes a communication system in a technical network, allowing communication between actors of the network each having an electronic interface, or interface module, adapted to operate according to a communication program and associated with equipment items in a building, by means of messages transmitted over the network in the form of frames comprising a plurality of functional segments,
in which said message frame comprises:
   a start-of-message segment,
   an optional address segment,
   a payload, and
   an optional verification segment, containing a key computed as a function of the signals that make up the message,
and in which:
   the communication program of each of the actors comprises an initial waiting sequence according to which, before sending a message, the actor may scan for the possible presence of messages on the network and may, after having confirmed the absence of messages on the network, send a start-of-message signal then wait for an idle time whose duration has been assigned uniquely to it, and continue sending its message over the network only if no other message has appeared on the network during said idle time.

In such a device, provision may advantageously be made for:
the payload of the message to be distributed over an integer number of packets each composed of an end of arbitration signal, an end-of-packet bit, and 64 data or payload bits,
the data length indicator of the message to consist of said integer number of packets that make up said payload of the message.

In embodiments in which the data length indicator is expressed over four bits, the number of packets may lie between 1 and 16.

According to an advantageous embodiment, provision can be made for the communication program of each of the actors to comprise an idle time computation sequence, according to which the idle time is computed as a function of the number constituting the address of said actor. The computation sequence can thus be used when parameterising a new home automation network, by appropriately choosing the addresses to define the priorities of the actors.

Preferably, the communication program of each of the actors may comprise a reception wait sequence according to which, after the end of sending of a message over the network, the actor may scan the messages on the network and await the reception of a reception acknowledgement message.

In addition, provision can advantageously be made for the communication program of each of the actors to comprise a current waiting sequence during which:
the actor may scan for the presence of messages on the network,
in the presence of a message, the actor may compare the content of the address segment of said message with its own address,
in case of difference between the content of the address segment of said message and its own address, the actor may return to the current waiting sequence,
in case of a match between the content of the address segment of said message and its own address, the actor may use the message.

To ensure a good message transmission reliability, provision can be made for the communication program of each of the actors to comprise a verification sequence, which performs a comparison between the payload and the key contained in the verification segment of the message, and at the end of which:
if the comparison between the payload and the key is unsatisfactory, the recipient actor may send over the network to the sending actor an error message, and return to the current waiting sequence,
if the comparison between the payload and the key is satisfactory, the recipient actor may send over the network to the sending actor a reception OK message, then use the payload.

According to another aspect, the invention proposes a home automation network provided with a communication system as defined above.

The operation of a communication system as defined above, and the progress of a communication method as defined above, are not incompatible with the continuous mode operation steps, in which a sender can indicate, in a first message following the establishment of a communication between the sender and a receiver, that the transmission of the data will then be performed continuously, until it runs out, in particular to transmit a large volume of data in a minimum time. In this case, the first message may contain a data length indicator which informs the receiver or receivers of the uninterrupted nature of the subsequent data transmission. Advantageous embodiments of the present invention, however, may be used for transmitting large quantities of data across the network, such as streaming data, where no data length indicator is required and the end of a message transmission or the end of a message packet or the end of a frame may be indicated by providing an appropriate signal on the bus, which will be seen later.

According to an aspect, there is disclosed herein a method for transmitting a digital message from at least one electronic device to at least one further electronic device over a serial asynchronous communications network comprising a communications bus to which the electronic device and the further electronic devices may be communicably connected, the message comprising at least a message payload comprising a plurality of data bits, said plurality of data bits comprising at least n contiguous data bits, the method comprising:
encoding at least a first *n* of the contiguous data bits of the message packet, said first n contiguous data bits representing one from 2*ⁿ* different n-bit code values depending on a combination of binary states of said first n contiguous bits, into a digital waveform on the communications bus, the waveform comprising at least a first pulse having a pulse width selected from one from 2*ⁿ* different pre-determined pulse widths depending on the value of the n-bit code represented by the first n contiguous bits.

According to another aspect, provision is made for interface module for connecting an electronic device to a communications bus, the interface module comprising at least one processor and at least one memory and being configured to encode a digital message from the electronic device for transmitting over a serial asynchronous communications network comprising a communications bus, said transmission being in the form of a digital electronic signal having a waveform comprising one or more pulses, said digital message being stored in the memory of the interface module, said transmission being performed according to the method described above.

According to yet another aspect, a communications network is provided, over which data may be transmitted according to the method described above.

### BRIEF DESCRIPTION OF THE DRAWINGS

The inventive concepts described herein will be better understood thanks to the detailed description which follows and the accompanying drawings, which are given as non-limiting examples of embodiments of the inventive concepts, namely:
Figure 1, illustrating an example timing diagram or waveform of a signal on a serial asynchronous bus, encoded according to an embodiment of the present invention;
Figure 2a, providing an example of a signal waveform comprising a number of digital pulses each having pulse widths selected from a plurality of different predetermined pulse widths, which may be observed on a bus line of a communications network according to an embodiment of the present invention during a data transmission phase of a message transmission by a participating device according to a protocol having a first polarity for data transmission;
Figure 2b, illustrating an example of a signal waveform comprising a number of digital pulses each having pulse widths selected from a plurality of different predetermined pulse widths, which may be observed on the bus line of a communications network according to an embodiment of the present invention during a data transmission phase of a message transmission by a participating device according to a protocol having a second polarity for data transmission, the second polarity being opposite to the first polarity;
Figure 2c, showing an example of a signal waveform similar to that of figure 2a, but where the protocol entails the bus line being held at a high level during the hold phase of the transmission;
Figure 2d, showing how a software flag may be transmitted according to an embodiment of the invention;
Figure 3a, illustrating an example of a correspondence table for mapping pulse widths to digital codes according to an embodiment of the present invention; and
Figure 3b, illustrating an example of a correspondence table for mapping pulse widths to digital codes according to another embodiment of the present invention.

### DETAILED DESCRIPTION

As is described in patent publication number EP3284220B1, a network of electronics devices may be created by connecting two or more electronics devices together via a bus line. The bus line may be a single wire for carrying digital signals. The wire may be made of copper or any other conductive material. In an embodiment of the invention, the wire is a standard copper electrical wire which is commonly used for wiring electrical appliances in a home, for example. The wire may otherwise be a conductive bar or a track or a sheet. Otherwise, the bus line may be a pair of wires carrying a differential signal. The pair of wires may be configured as a twisted pair. In other cases, the bus line may be realised as an optical fibre. In still other cases, the bus line may be realised as a wireless communications channel, using radio signals, for example.

It is worth pointing out that the term "bus", as used in the present document, may be taken to mean a wired or wireless local area network, and may further include optical fibre networks. Preferred embodiments of the invention described herein, however, feature wired local area network configurations, based on coaxial conductors, twisted pairs of conductors, or single wire conductors or tracks or any similar type of galvanic conductor.

According to another embodiment, the bus line may be realised wirelessly, with signals being communicated as wireless signals between participating devices (actors). The preferred embodiments, however, provide further advantages such as those of economy and/or simplicity of implementation, where the bus line is a standard galvanic conductor such as a conductive wire or conductive track or even a twisted or non-twisted pair of wires, all of which are well known in the communications domain, especially in the fields of building and domotics. When implemented in a building, for example, the bus line may be even be a metallic conductor that makes up a part of the structure of the building or a reinforcing frame or reinforcing bars which form part of the structure of a wall or a floor or a ceiling, for example. Reinforced concrete generally features such bars. As such, a bus line, in the context of the present invention, may not even have to be added when installing or upgrading a communications network according to embodiments of the invention described herein.

Participating devices, or elements, of the communications network described herein comprise an interface module, preferably having a microprocessor, for handling and formatting the signals on the bus line. The interface module may drive the bus line for transmitting digital messages on the bus line and it may "listen" for messages on the bus line. Each participating device is attributed an address, and the interface module may be configured to recognise messages which contain the address of its corresponding device and treat the message as if it were destined for the device. Similarly, the interface module may include the address of its corresponding device in messages that it transmits onto the bus line on behalf of the device so that other participating devices on the network can detect that such messages came from the respective device. Peer-to-peer communication is thus possible in certain embodiments of the network described herein. In other embodiments, messages may be transmitted in broadcast mode, where all participating devices and their respective interface modules treat the messages as if they were addressed to them.

In some embodiments, having a centralised controller, for example in a network having a star topology, each actor in the network may have its own bus line for communicating with a central controller, in which case there is no need for a recipient address or a sender address to be included in messages transmitted over the bus.

It is well-known in the field that a bus of the type described in the publication mentioned above may suffer from errors in transmission when two participating devices attempt to transmit a message at the same time. An arbitration scheme is thus disclosed to avoid such problems and to eliminate the possibility of transmission errors occurring due to such collisions. Such a scheme is also employed in the present invention, while further improvement is also provided in order to minimise any degradation of the signals on the bus line, especially when many devices are attached to the bus line and/or where the bus line is relatively long or for any other reason that the bus signals may be subjected to perturbations. Embodiments of the present invention provide for improved signal integrity on the bus line where the network comprises up to 65,536 participating devices. Embodiments of the present invention also provide for improved signal integrity for bus line lengths in excess of several hundreds of metres. A communications protocol is disclosed which minimises the amount of electromagnetic interference generated by the bus line, and which renders the bus line relatively immune to externally generated electromagnetic interference, even when the bus line is a single wire, rail or track rather than a twisted pair, for example. When deployed within a communication network for a domotics system in a home, embodiments of the present invention allow for ease of adaptation and/or upgrade of the domotics system whenever new devices are to be connected to the bus or if existing devices are to be moved to other parts of the network, due to the simple topology of the network, which in turn is possible because of the high level of signal integrity which is made possible thanks to the invention and the efficiency of its arbitration scheme.

One of the features which is described in the aforementioned patent publication, and which is also exploited in the present invention, is the following arbitration scheme afforded by a communications protocol within a communications network comprising a plurality of actors of the network each having an electronic interface device. The interface device provides a connection for its associated device to the bus line and preferably includes a microprocessor configured to operate according to the protocol. According to the protocol, the messages are transmitted on the bus line in the form of message packets. The beginning of the message has a start-of-message segment and the message may continue with a stream of data of any length, or if the data is divided into message packets, the message may continue with one or more message packets. The start-of-message indication may be a start-of-message signal followed by an idle time, as described in the publication EP3284220B1.

Before sending a message, a device must first monitor the bus for the possible presence of messages on the network and must, after having confirmed the absence of messages on the network, establish the start-of-message signal then wait for an idle time whose duration has been assigned uniquely to it. The device may then continue sending its message over the network as long as no other message has appeared on the network during the idle time.

Since the idle time is mandatory and the idle time duration is assigned uniquely to each actor in the network, conflicts in the case where multiple devices attempt to send messages over the network simultaneously are managed automatically as a function of the order of priority defined by the duration of the idle time: the actors benefiting from a shorter idle time duration automatically have priority over the actors having a longer idle time duration, because they can more rapidly send a new message by thus forcing the other actors to wait for the end of the priority messages. During the setup of the network, it is thus possible to assign to the priority actors a short idle time duration. The operating defects observed on the equipment items of the prior art, particularly upon a collision between the starts of messages from several simultaneous senders, are thus avoided.

To uniquely assign an idle time duration to each actor in the network, it is in particular possible to compute the idle time durations based on the addresses of the actors in the network.

According to embodiments of the present invention, a message may comprise any number of packets and a packet may include any number of bits. Some examples will be given in the following description.

To simplify the setup and configuration of the local area network upon its installation, it is advantageously possible to provide for the duration of the idle time assigned to each actor to be an ascending function of the number constituting the address of said actor.

In this way, it is sufficient to appropriately choose the addresses of the different actors, the latter simultaneously defining the order of priority.

To further increase the reliability of data transmission in a home automation network according to embodiments of the present invention, while observing the priorities, it is advantageously possible to provide for, upon the transmission of a message over the network between a sending actor and a recipient actor:
after the end of sending of the message over the network, the sending actor to scan the messages on the network and await the reception of a reception acknowledgement message,
on the reception of the message which is intended for it over the network, the recipient actor to perform a control sequence by comparison between a payload of the message and a key contained in a verification segment of the message,
if the comparison between the payload and the key is satisfactory, the recipient actor to send over the network to the sending actor a reception OK message,
if the comparison between the payload and the key is unsatisfactory, the recipient actor to send over the network to the sending actor an error message,
on reception of a reception OK message, the sending actor to abstain from any other sending over the network during its waiting sequence,
on reception of an error message, the sending actor to abstain from sending over the network during its waiting sequence, then resume, if possible, the transmission of its message over the network.

As an optional alternative, still to make the data transmission in the home automation network reliable, while observing the priorities, it is advantageously possible to provide for, upon the transmission of a message over the network between a sending actor and a recipient actor:
after the end of sending of the message over the network, the sending actor to scan the messages on the network and a wait the reception of a reception acknowledgement message,
on the reception of the message which is intended for it over the network, the recipient actor to perform a control sequence by comparison between the payload and the key contained in the verification segment of the message,
if the comparison between the payload and the key is satisfactory, the recipient actor to send over the network to the sending actor a reception OK message,
on reception of a reception OK message, the sending actor to abstain from any other sending over the network during its waiting sequence,
in the absence of reception of a reception OK message for a predetermined duration, the sending actor to once again send its message over the network.

In this alternative, if the comparison between the payload and the key is unsatisfactory, the recipient actor sends no message over the network. It is the sending actor which, not having received a reception OK message for a predetermined duration (corresponding for example to the return time for a reception OK message), once again sends its message over the network.

Advantageously, after a predetermined number of unsuccessful sendings of the message over the network (no reception OK message having been received by the sending actor), the sending actor can send a recipient actor malfunction message for the attention of the other sending actors in the network or for the attention of a centralised (or decentralised) control system responsible for storing and indexing any malfunctions of the recipient actors for the purposes of maintenance operations.

Also, when it does not have a message to send, each of the actors executes a current waiting sequence during which:
the actor scans for the presence of messages on the network,
in the presence of a message, the actor compares the content of the address segment of said message with its own address,
in case of difference between the content of the address segment of said message and its own address, the actor returns to the current waiting sequence,
in case of a match between the content of the address segment of said message and its own address, the actor undertakes a control sequence, by comparison between the payload and the key contained in the verification segment of the message,
if the comparison between the payload and the key is unsatisfactory, the recipient actor sends over the network to the sending actor an error message, and returns to the current waiting sequence,
if the comparison between the payload and the key is satisfactory, the recipient actor sends over the network to the sending actor a reception OK message, then uses the payload.

A message packet may comprise any number of bits, defined by the protocol. By way of example, a packet may comprise 64 bits, or 8 bytes, or even more. In other embodiments, there may only be 8 bits, or 1 byte, in a packet, or even less. Although protocols according to embodiments of the present invention may provide for an indicator allowing to detect when a message packet commences and a further indicator allowing to detect when a message packet ends, in advantageous embodiments for use in environments where large amounts of data are to be streamed over the network, there is no indication of a packet end. Indeed, in such embodiments, the notion of packets is somewhat redundant, and reference is made simply to a payload of data, the payload having no fixed length.

A message packet may contain any number of different functional segments, such as for example an optional address segment, an optional instruction segment, a data segment or payload, and an optional verification segment. In other embodiments, a packet may contain only a data segment. It is worth noting that a data segment may be spread over a number of successive packets depending on the type of device for which the message is intended or whence the message originates. For example, if an intended recipient device is a lamp, which only requires to be switched on or off, the data segment may be able to fit into a single packet, whereas a video camera, as an originator of a message, configured to provide streaming content onto the bus, may require a large number of packets to be able to transfer a number of video frames over the bus. When a message comprises a single packet, the packet may include an optional address segment, an optional instruction segment, a data segment or payload and an optional verification segment. For a multi-packet message, the first packet may comprise an optional address segment, an optional instruction segment, at least a part of a data segment or payload and an optional verification segment. Subsequent packets of the multi-packet message may then comprise simply data segments (payloads) or payloads and optional verification segments until the end of the message.

In all of the embodiments of the present invention disclosed herein, the verification segment is optional. The verification segment, when present, serves as a means for a recipient of a message to verify whether a message has been received correctly. A device who transmits a message may compute a key as a function of the signals that make up the message and insert this key into the verification segment of the message. Recipient devices may then perform a similar computation, thus allowing for recipient to verify whether all signals have been correctly received.

In embodiments where the verification segment is absent, the verification segment may be replaced by a part of the payload. Since the verification segment was one byte long in the example given, an extra byte of payload may replace the verification segment in embodiments without a verification segment and being more than one byte in length.

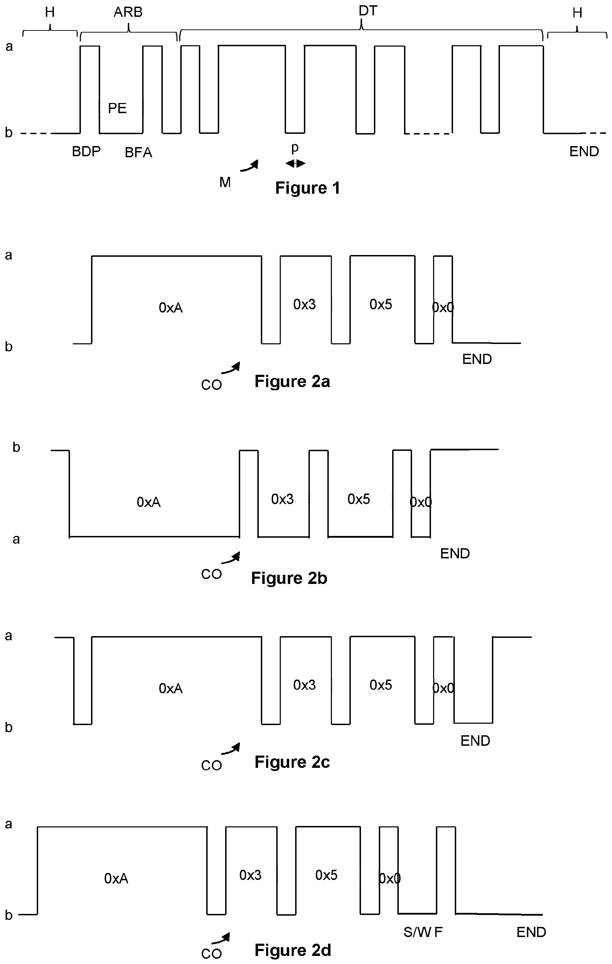

Figure 1 shows an example of a signal waveform of a message (M) being transmitted over a bus line according to an embodiment of the present invention. The waveform may be divided into a hold phase (H), an arbitration phase (ARB) and a data transmission phase (DT). The hold phase (H) can be seen at the end of the waveform and at the beginning of the waveform shown in figure 1. The message comprises a start-of-message segment (BDP, PE), which is followed by a message packet (CO). According to embodiments of the present invention, the start-of-message segment begins with a start-of-message signal (BDP) and is followed by an idle time (PE). The idle time is a predetermined time duration which has been assigned to a device whence the message originates, each device (Dn) on the network having been assigned a unique idle time (PEn). In Figure 1, the start-of-message segment appears during the arbitration phase of the waveform, where the start-of-message signal (BDP) can be seen, followed by a unique idle time (PE), depending on which participant in the network transmitted the message. The idle time end is marked by an end-of-arbitration signal (BFA).

In figure 1, the bus line is at a low level during the hold phase and the start-of-message signal takes the form of a positive pulse, while the end-of-arbitration signal also takes the form of a positive pulse. Other variations for setting up the start-of-message signal and the end-of-arbitration signal are possible, however. For example, instead of a pulse, the start-of-message signal could be just a rising edge, with the end-of-arbitration signal being a falling edge or even a low pulse. Otherwise, if the protocol dictates that the bus line be at a high level during the hold phase, then the start-of-message signal could be a negative pulse or a negative, or falling, edge, while the end-of-arbitration signal could be a rising edge, a falling edge, a negative pulse or a positive pulse, depending on what the start-of-message signal is. According to different embodiments, where different variations of the protocol are implemented, it has thus been shown that the waveform of the signal on the bus line may take one from many different possible forms during the arbitration phase.

The data transmission phase then follows, where the message packet (CO) is transmitted, with its optional address segment, its optional instruction segment, its payload or data segment and its optional verification segment. In figure 1, the message waveform during the data transmission phase can be described as having a series of pulses having particular pulse widths, with each pulse being delimited by an inter-pulse period. The pulses move from a base level to a pulse level. Depending on the polarity which is used for the data transmission part of the protocol, the pulses may be positive pulses or negative pulses. In a positive polarity, the base level may be a low level, with the pulse level being a high level. These pulses are said to be positive pulses. Conversely, in a negative polarity, the base level may be a high level and the pulse level a low level. Pulses in a negative polarity are said to be negative pulses. Whether or not these data pulses represent an address, an instruction, or a payload, the fact remains that each pulse represents some data and each pulse is delimited by an inter-pulse period where the pulse moves to its base level. In fact, as will be shown later, this inter-pulse period can be called an inter-character period because each pulse represents a character. The inter-character period has a fixed, pre-determined inter-character period duration (p), as will be described later according to preferred embodiments. Pulses remain at the pulse level (a) for a duration equal to one selected from a plurality of different pulse width durations, depending on the data being transmitted. Successive pulses within the same payload are delimited by the inter-character periods (p) where the signal is at the base level (b). Different arrangements may be made to indicate that the payload has come to an end or to indicate a significant break in the payload, for example to indicate an end of frame for the case where video data is being transmitted. These arrangements will be described later, but in general terms the arrangements involve keeping the bus line at its base level for a length of time which exceeds the pre-determined inter-character period duration.

As well as including an address segment, if present, and a payload (data segment), a message packet may still further include a verification segment for a checksum or key, for example. Other information may also be included, for example an optional indicator (NBC) of the length of the payload (SD), an optional indicator of whether or not an acknowledgement of receipt of a message is expected (AR) and an optional operator (OP). According to an embodiment, the start of message segment comprises a start-of-message signal (BDP). The start-of-message signal is followed by an idle time (PE), whose end is signalled by the end-of-arbitration signal (BFA). The message packet then follows. The end of the message may be indicated by the bus line remaining at its base level for longer than the predetermined inter-character period duration.

According to embodiments of the invention, as well as comprising its payload, a message packet may optionally further comprise an address segment. It may further comprise an optional instruction segment and may still further comprise an optional verification segment. Depending on different embodiments implementing different variations of the bus protocol, the address segment may occupy a 4-bit field, meaning that the message can be used to address up to 16 devices, which may be considered to be a small number of participants in a network for a domotics application, for example. The address segment may be followed by an optional instruction segment, which may include, for example, a four-bit field called NBC, a one-bit field called AR and a three-bit field called OP (operator). The operator may be used to indicate an instruction or a type of instruction. The operator may be used to manage addresses of groups of actors, and, generally, to tell the recipient what it has to do with received data. Depending on how the protocol is implemented, the sizes and positions and functions of these fields may vary. For example, the NBC field may indicate how many packets constitute the current message. If NBC were a four-bit field, messages could have up to sixteen packets depending on the value of the NBC field, between 0 and 15 (or 0x0 and 0xF). However, in preferred embodiments of the present invention, there is no NBC field and the packet is deemed to be of arbitrary length, with the end of message indication being given simply by the bus line remaining at its base level for longer than the pre-determined inter-character period duration before moving back to the pulse level and remaining there until the next message packet is to be sent, the next message packet being preceded by its associated start-of-message segment. The AR field, when used, indicates whether the sender of the message expects the intended recipient to acknowledge correct reception of the message. The OP field, when used, could be a three-bit field. The payload then follows. The verification segment, when present, may comprise an eight-bit field allowing for the recipient to check whether the message was correctly received.

Another type of packet, which may be of use in a network involving a larger number of participating devices or elements, could be one where its address segment occupies a two-byte field, or 16 bits, allowing for addressing of up to 64k devices, or 65,536 devices, which would count as a rather sizeable network in a domotics environment, for example. Consequently, in such a message packet, the data segment may have to be somewhat shorter than in the example above. In embodiments where the message packet is eight bytes long and where the instruction segment is not used, the data segment may occupy a five-byte field. In embodiments where neither the instruction segment nor the verification segment are used, the data segment, or payload, may occupy a 6-byte field. Finally, in embodiments in which the address segment is not used, the data segment may occupy up to 8 bytes. Of course, in embodiments where the packet length is not defined, the data segment can have any length. The end of the data segment may be indicated by the bus remaining at its base level for longer than the predetermined inter-character period duration.

As mentioned before, it is possible for a message to be divided into message packets, with the message comprising between 1 and any predetermined plurality of packets. In such embodiments, the optional NBC field would be used. However, in preferred embodiments of the present invention, the length of a message can be arbitrary. It can be said that the packet length can be arbitrary, or the payload length can be arbitrary, with data being sent in a continuous flow until an end of data signal is given or until a software flag is indicated. Software flags may be used within long data streams to divide the data streams into meaningful parts such as video frames where the data stream represents video data. According to an embodiment without the NBC field, and where a long data stream comprising plural frames of data, the frame delimiters may be marked in the data stream by adding a software flag. A software flag may be indicated by the bus remaining at its base level for longer than the pre-determined inter-character period duration. The end of message, or end of the data stream, may be indicated by the bus remaining at its base level for longer than the length of time which indicates a software flag if the protocol provides for this and in any case for longer than the pre-determined inter-character period duration. Other, alternative, methods for indicating the presence of a software flag will be described later.

A goal of the present invention is to provide an improved method for ensuring efficient, rapid and reliable, preferably error-free, transmission and reception of electronic messages over a local area asynchronous serial communications network having a plurality of network participants connected to the same bus line. Such efficient, rapid and reliable transmission and reception should be maintained where the network comprises up to 65,536 participants connected to a bus line and where the bus line may have a length in the order of more than several hundreds of metres or more. Another goal is to minimise electromagnetic emissions generated by the bus line or any of the network interface modules of the participating devices. In order to achieve this, a judicious use of a pulse width manipulation scheme for encoding and decoding the message packets is proposed. The pulse width manipulation scheme is an innovative further extension of the novel method of implementing the arbitration scheme which was disclosed in the patent publication of the inventor of the present invention, and which has already been described above in the prior art section.

According to an aspect of the present invention, when transmitting data constituting at least part of a message packet from a participating device in the network onto the bus line, it is proposed to encode at least a first n contiguous bits of the message packet, the first n contiguous bits each having one of two binary states and collectively representing one from 2ⁿ different code values depending on a combination of the binary states of the first n contiguous bits, into a first digital pulse on the bus line, the digital pulse transitioning from a base level to a pulse level and back to the base level, the pulse having a pulse width which depends on the code value represented by the first n contiguous thus encoded bits. It is further proposed to encode one or more further n contiguous bits of the message packet, the further n contiguous bits each having one of two binary states and collectively representing one from 2ⁿ different code values depending on a combination of the binary states of the further n contiguous bits, into a at least one further digital pulse on the bus line, the further digital pulses each transitioning from a base level to an pulse level and back to the base level, the further pulses having pulse widths which depend respectively on the code values represented by the corresponding n contiguous thus encoded bits. Between consecutive pulses, the waveform remains at its base level for a predetermined duration known as the inter-character period duration.

According to another aspect, when receiving at least a first digital pulse from the bus line, the first digital pulse constituting at least a part of a message packet from a participating device in the network, it is proposed to measure the pulse width of the first digital pulse between the time that the pulse transitions from a base level to a pulse level and back to the base level and to convert the measured pulse width to one from 2ⁿ n-bit digital codes according to a predetermined mapping of pulse width values or ranges to corresponding n-bit digital codes. It is further proposed, when receiving further digital pulses from the bus line, the further digital pulses also constituting at least a further part of the message packet from the participating device in the network, to measure the pulse width of the further digital pulses and to convert the further measured pulse widths to corresponding ones from 2ⁿ n-bit digital codes according to said predetermined mapping. A correspondence table mapping 2ⁿ pulse widths or pulse width ranges to 2ⁿ corresponding *n*-bit digital codes may be used to perform this mapping.

According to an embodiment, the bus line remains at its base level between successive pulses for a length of time known as a predetermined inter-character period duration (p). According to an embodiment, the pulse width is a multiple of the predetermined inter-character period duration (p). According to an embodiment, the pulse width is a function of the predetermined inter-character period duration and the code value represented by the *n* contiguous bits. According to a particular embodiment, the pulse width is equal to the product of the code value and the inter-character period duration (p). The term inter-character period may be used when describing the part of the waveform between pulses, where the signal waveform returns to its base level because it is the spacing between pulses and each pulse represents a character. When n is equal to 4, for example, 4 contiguous bits of data are used to represent one from 16 different hexadecimal characters between 0x0 and 0xF.

Consequently, in a communications network in which an embodiment of the present invention is deployed, a message on the bus line may begin with a start-of-message signal, flowed by an idle time, the length of which is determined by the unique idle time assigned to the device whence the message originates, followed by an end-of-arbitration signal and then a waveform comprising m pulses forming the packet of the message, or the payload, each pulse transitioning from a base level to a pulse level and back to the base level, the pulse width of each of the *m* pulses depending on the values of successive corresponding groups of *n* bits of the message packet. Each of the *m* pulses, or *m* groups of *n* bits, represents a character. As long as the number *m* has not been reached, the length of time the waveform remains at the base level is a predetermined inter-character period duration. In other words, the length of time between pulses in the same packet is a constant predetermined inter-character period duration. As long as the next pulse appears within the predetermined inter-character period duration, the next pulse is deemed to form part of the same packet, or payload, as the preceding pulse. If the signal on the bus line remains at the base level for a length of time which exceeds the predetermined inter-character period duration, then this may be taken to be either an end of frame indication or an end-of-packet indication or an end-of-payload indication. The protocol determines how much longer the line should remain at the base level for an end of frame and how much longer for an end of packet or end of payload. For example, an end of frame duration may be twice that of an inter-character period duration and an end-of-payload or end-of message duration may be three times that of an inter-character period duration, or vice versa. Any further pulses which may appear on the bus line after an end-of-payload are not interpreted as forming part of the same message packet.

In the encoding and conversion schemes described above, the pulses may be of a positive polarity or a negative polarity. For example, in a positive polarity system, the pulse level may be a high level or a digital 1 and the base level may be a low level or a digital 0. Otherwise, in a negative polarity system, the pulse level may be the low level and the base level the high level.

According to a preferable embodiment, the number of contiguous bits *n* which are encoded into a pulse is 4. Consequently, each of the hexadecimal codes 0x0 through 0xF may be encoded to provide pulses having one from 16 different pulse widths. Conversely, pulses having different pulse widths may be decoded to provide 16 different hexadecimal codes 0x0 through 0xF.

Figure 2a shows an example of the data transmission phase of a signal waveform on the bus according to an embodiment of the present invention when a participating device transmits a message packet CO comprising 4 groups of successive contiguous 4-bit codes reading 0xA, 0x3, 0x5 and 0x0.

Whereas Figure 2a illustrates an example where the communications protocol is of a first polarity, wherein the pulses are high pulses, Figure 2b shows an example waveform of a signal which may be observed on the bus line in an embodiment where the polarity used in the protocol is reversed, in which the pulses are low, when the same message as in Figure 2a is being transmitted on the bus.

Figure 2c is similar to figure 2a only the bus line is held high during the hold phase.

Figure 2d shows an example of the data transmission phase of a signal waveform on the bus according to an embodiment of the present invention when a participating device transmits a message packet CO comprising 4 groups of successive contiguous 4-bit codes reading 0xA, 0x3, 0x5 and 0x0, followed by a software flag (SW/F).

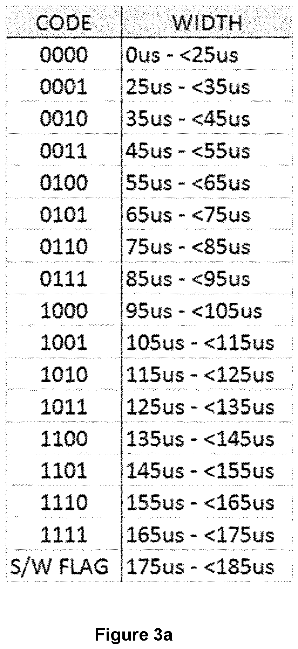

Figure 3a shows a correspondence table of pulse widths to hexadecimal codes which may be deployed in a bus interface module according to an embodiment of the present invention.

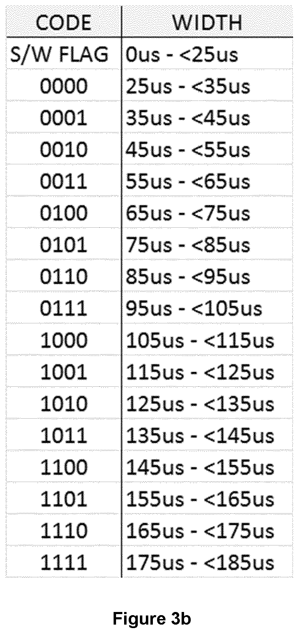

Embodiments of the present invention provide for an advantageous solution for the transmission of long streams of data across the network, for example in cases where streaming audio or streaming video are transmitted over the network. Video data is often organised in frames, with successive frames being delimited by a software flag. According to an embodiment of the invention, instead of using the length of time that the bus remains at its base level as an indicator of the presence of a software flag as described above, a given code may be reserved to provide a software flag so that the flag may be represented by a pulse. Figure 3a shows an example correspondence table of pulse widths to hexadecimal codes in which the longest pulse is taken to indicate the software flag. Figure 3b shows an example correspondence table in which the shortest pulse is reserved to indicate the presence of a software flag. The values shown in the "WIDTH" columns in figures 3a and 3b are provided solely as examples. The width values which would appear in such tables when deployed in a system according to an embodiment of the invention may vary greatly from these example values. The width values may be derived by experimentation, for example.

According to an embodiment of the invention, the arbitration scheme afforded by the protocol involves actors on the bus listening for the presence of a message on the bus line before attempting to transmit a message onto the bus line. If the actor detects that no messages are present on the bus line, then that actor may then send a start of message signal, for example a positive pulse or a negative pulse. The pulse may have a predetermined width or duration. Following the assertion of the start-of-message signal, the actor which transmitted it should then wait for a predetermined idle time. Each actor has a different idle time, which has been pre-assigned to it such that all actors have idle times which are unique to themselves within the communications network. If, during the idle time, no other element has transmitted a message, i.e., the actor which issued the start-of-message signal does not detect any further messages on the bus line for the duration of its idle time, then that actor may then proceed in transmitting its message onto the bus line.

According to an embodiment, the idle times assigned to each actor in the network are derived from the address attributed to the respective actor. In an embodiment the idle time is a function of the element's address and a default idle time. According to an embodiment, the idle time is proportional to the address. In some cases, the duration of the idle time assigned to each actor is an ascending function of the number constituting the address of said actor.

As mentioned above, according to an embodiment, the message packet (CO) may comprise one or more bytes of information. In some embodiments it is even possible to have less than 1 byte of data in the data segment of a message Different types of packets exist according to different embodiments. For example, a message packet may comprise 8 bytes, of which a certain number of bits indicate a destination address (for example, 4 bits, or up to 2 bytes), an optional instruction or operator and optionally a checksum or key. The address of the sender of a message may either be implied because it may be derived from the idle time (PE) using the idle time assignment table. Any actor may measure the idle time in order to ascertain which actor transmitted the particular message. In other embodiments the sender of a message may explicitly include its own address in the message packet.

According to an embodiment, devices on the network may comprise a look-up table, which may be a copy of the assignment table for assigning idle times to participating devices, for mapping measured or observed idle times to device addresses or device identifiers.

According to an advantageous embodiment, a protocol is used which increases the reliability of signals on the bus line and which reduces the amount of parasitic electromagnetic radiation radiated from the bus line. Such embodiments may make use of a correspondence table for converting different digital codes to corresponding pulse widths and vice versa.

Embodiments of the present invention may be deployed in the context of a home automation network of a dwelling or industrial building, or in the context of an embedded systems in a means of transport such as in a car, a ship, a train or other rail-bound transport, an aircraft, and the like, or in an avionics setting, a medical environment, an aerospace environment or an industrial environment for example.

An example environment automation system, in an environment such as a home, an office, a factory or other workplace, a medical establishment, a public venue, a hotel, a train, a plane and the like, in which an embodiment of the present invention may be deployed, may comprise a plurality of participating devices, or actors, distributed throughout the environment, each adapted to communicate with each another to form a home automation network. Among such actors, there may be an alarm siren, a biometric sensor, a surveillance camera, a motion sensor, a window sensor for detecting whether the window is closed or open, a hot air intake valve, a fan, a water intake valve, a garage door actuator, a power supply control for a heating resistor, a controlled electrical outlet, one or more controlled lighting appliances, and a control device, for example.

Each of the actors in the network comprises an electronic interface, or interface module, configured to operate according to a communication program, functionally interposed between the corresponding equipment item of the actor and a bus over which the messages circulate between the actors.

Thus, the alarm siren may comprise an alarm interface module interposed between the bus and the functional equipment item generating the alarm sound signal. Similarly: the biometric sensor may comprise a biometric sensors interface module and the functional members of the sensor; the camera may comprise a camera interface module and the image-capturing members of the camera; the motion sensor may comprise its interface module and its functional sensor members; the window sensor may comprise its interface module and its functional sensor members; the valve may comprise its valve interface module and the valve actuator; the fan may comprise its fan interface module and the fan motor; the solenoid valve may comprise its solenoid valve interface module and the solenoid valve electromechanical actuator; the door actuator may comprise its interface module and the door motor; the power supply control may comprise its interlace module and an electrical switch connected in series with the electrical resistor at the terminals of the electrical power supply of the building; the controlled outlet may comprise its outlet interface module and a controlled switch; the lighting appliances may comprise their respective interfaces modules and switches for selectively powering the different light sources.

The control device may comprise an electronic communication interface module operably connected to the bus and may further comprise a display device and a keypad.

It will be understood that the actors, as described above, are given purely by way of example, and that a home automation system according to the invention may comprise any other types of actors susceptible to form part of a home automation system.

It will also be understood that in most cases, the actors within the system are capable not only of receiving messages, but also of sending messages over the network. In other cases, some of the actors maybe incapable of only sending messages over the network. In the description which follows, actors are capable of sending and receiving messages.

The information may circulate over the bus, between the different actors, in the form of messages M made up of a series of binary signals according to a determined protocol in which a plurality of different functional segments as specified.

According to an embodiment of the protocol described herein, the message comprises a start-of-message segment, comprising a start-of-message signal BDP followed by an idle time PE during which no more activity is expected unless another actor makes a claim for taking over the bus. The idle time has a length which is determined by the address of the sender of the message, this length allowing the recipients of the message to recognise the origin of the message M. The message further comprises a packet of data CO, which may begin after an end-of-arbitration signal has been given. The packet, and indeed the message, may end when the bus line is held at its base level for significantly longer than the predetermined inter-character period duration.

The duration of the idle time PE of the sender can for example be determined by a predetermined assignment table in which different idle times PEn are uniquely correlated with the address of each of the actors on the network.

Embodiments of the present invention allow for the establishment of priorities between the different actors in the network. These priorities can advantageously be established in relation to the address of each actor in the network. The addresses of each of the actors may be assigned by an installer when configuring the system during its installation. Alternatively, the addresses may be assigned automatically, by a programme in the system, as a function of the nature of the actor concerned.

By way of example, the following addresses may be assigned to different elements: 1001 for the alarm siren; 1101 for the biometric sensor; 1201 for the surveillance camera; 1301 for the motion sensor; 1401 for the window sensor; 1D01 for the hot air intake valve; 2101 for the fan; 2201 for the solenoid valve; 5003 for the garage door actuator; 4000 for the power supply control of the heating resistor; 70F0 for the remote controlled outlet; 70D0 and 70F1 respectively for the lighting appliances; and 9000 for the control device.

An installation program, comprising the assignment table, may indicate to each actor the idle time PE which is assigned to it, which idle time PE may be stored in the interface module of the actor. This idle time PE determines the order of priority of sending of the messages M over the network by the corresponding actor, through an initial waiting sequence contained in the communication program of each of the actors. According to this initial waiting sequence, the actor must, before sending a message M, scan for the possible presence of messages M on the network, and it may then, after having confirmed the absence of messages M on the network, send a start-of-message signal BDP then wait for a duration equal to the idle time PE which has been assigned to it, and it may then continue sending its message M over the network only if no other message M has appeared during said idle time PE.

It will then be understood that an actor to which the lowest address has been assigned has the lowest idle time PE, and therefore has a greater priority for sending messages M over the network. In the above example, the alarm siren will have an idle time PE whose duration is low, whereas the garage door actuator will have an idle time PE whose duration is several times greater.

In embodiments of the present invention where it is sought to economise on the cost of the processor used in the interface module, it is possible for the sender of a message to include its own address within the message, for example at the beginning of the message. In this way, the bus arbitration scheme may be assured without relying on the processor being able to make accurate time measurements. In such cases, instead of measuring the idle time between the start-of-message signal and the end-of-arbitration indicator, the sender's own address can simply be read from within the message.

By using the pre-determined inter-character period duration as a synchronsing aid it is possible to use low-cost processors in the interface modules according to embodiments of the present invention. In such embodiments, the processor may be configured to use the inter-character period duration, where the bus remains at the base level, as a reference for calculating the widths of the pulses when the bus remains at its pulse level.

## Claims

1. A method for transmitting a digital message from at least one electronic device to at least one further electronic device over a serial asynchronous communications network comprising a communications bus to which the electronic device and the further electronic devices may be communicably connected, the message comprising at least a message payload comprising a plurality of data bits, said plurality of data bits comprising at least n contiguous data bits, the method comprising:
encoding at least a first *n* of the contiguous data bits of the message packet, said first *n* contiguous data bits representing one from 2*ⁿ* different *n*-bit code values depending on a combination of binary states of said first *n* contiguous bits, into a digital waveform on the communications bus, the waveform comprising at least a first pulse having a pulse width selected from one from 2*ⁿ* different pre-determined pulse widths depending on the value of the *n*-bit code represented by the first *n* contiguous bits.

2. The method according to claim 1, the waveform having a base level and transitioning towards a pulse level for the duration of the first pulse before returning to the base level at least for a predetermined inter-character period duration.

3. The method according to claim 2, the method further comprising encoding one or more further *n* contiguous bits into the digital waveform on the communications bus such that the waveform further comprises one or more corresponding further pulses each separated from a preceding pulse by the predetermined inter-character period duration, said further pulses having pulse widths selected from one from 2*ⁿ* different pre-determined pulse widths depending on the value of the *n*-bit code represented by the corresponding further *n* contiguous bits.

4. The method according to either of claims 2 or 3, the method further comprising transmitting a software flag indicator by establishing a base level on the bus line which lasts for a software flag duration which is longer than the predetermined inter-character period duration.

5. The method according to claim 4 and either of claims 2 or 3, the method further comprising transmitting an end-of-message signal or an end-of-packet signal by establishing a base level on the bus line which lasts longer than both the predetermined inter-character period duration and the software flag duration.

6. The method according to any of claims 1 to 5, the message further comprising a start-of-message signal followed by an idle time, the method further comprising: sensing the communications bus, by the electronic device in the network, for the presence of at least one pulse; in the absence of a pulse on the communications bus, transmitting a start-of-message signal on the communications bus by the electronic device and waiting for an idle time (PE) whose duration has been assigned uniquely to the electronic device; and as long as no pulses are sensed on the communications bus by the electronic device during the idle time, transmitting at least one message packet of the message on the communications bus.

7. The method according to any of the preceding claims, wherein said pulse level of the waveform is a higher level than said base level.

8. The method according to any of claims 1 to 6, wherein said base level of the waveform is a higher level than said pulse level.

9. The method according to any of the preceding claims, wherein the communications bus has a configuration selected from one of: a single wire, cable or track; a pair of galvanic connectors; a twisted pair of galvanic connectors; an optical fibre; and a wireless communications channel.

10. A method for receiving a digital message from at least one electronic device over a serial asynchronous communications network comprising a communications bus to which the electronic device and one or more further electronic devices may be communicably connected, the message comprising:
receiving at least one pulse from the communications bus, the pulse having a pulse width;
measuring the pulse width of the pulse;
converting the pulse width to one from 2*ⁿ n*-bit digital codes according to a predetermined correspondence table comprising pulse width values or pulse width value ranges and their corresponding *n*-bit digital codes.

11. An interface module for connecting an electronic device to a communications bus, the interface module comprising at least one processor and at least one memory and being configured to encode a digital message from the electronic device for transmitting over a serial asynchronous communications network comprising a communications bus, said transmission being in the form of a digital electronic signal having a waveform comprising one or more pulses, said digital message being stored in the memory of the interface module, said transmission being performed using a method according to any of claims 1 to 10.

12. The interface module according to claim 11, the interface module being further configured to include a start-of-message segment at the beginning of said message by transmitting on the communications bus a start-of-message signal followed by an idle time during which the interface module ceases any message transfer, said idle time having a duration which may be derived from a value stored in the memory, said duration being unique to the interface module among a plurality of interface modules connectable to the communications bus at the same time.

13. The interface module according to either of claims 11 or 12, said interface module being further configured to receive at least one digital message from a digital signal on the communications bus, the memory storing an assignment table for mapping one or more electronic devices simultaneously connectable to the communications bus to one or more corresponding idle times.

14. A serial asynchronous communications network comprising a communications bus for connecting a plurality of electronic devices each having an interface module according to any of claims 11 to 13.
